# EUROPÄISCHE PATENTSCHRIFT

(11) **EP 3 137 353 B1**
(45) Veröffentlichungstag und Bekanntmachung des Hinweises auf die Patenterteilung: **01.07.2020**
(21) Anmeldenummer: 15703878.7
(22) Anmeldetag: 07.02.2015
(51) Int. Cl.: B60T 8/1769, B60T 8/32

(54) **VERFAHREN ZUM BETREIBEN EINER FAHRERASSISTENZEINRICHTUNG FÜR EIN KRAFTFAHRZEUG SOWIE ENTSPRECHENDE FAHRERASSISTENZEINRICHTUNG**
METHOD FOR OPERATING A DRIVER ASSISTANCE DEVICE FOR A MOTOR VEHICLE AND CORRESPONDING DRIVER ASSISTANCE DEVICE
PROCÉDÉ DE FONCTIONNEMENT D'UN DISPOSITIF D'AIDE À LA CONDUITE POUR UN VÉHICULE AUTOMOBILE ET DISPOSITIF D'AIDE À LA CONDUITE CORRESPONDANT

(30) Priorität: 30.04.2014 DE 102014006191
(43) Veröffentlichungstag der Anmeldung: 08.03.2017
(73) Patentinhaber: Audi AG, 85045 Ingolstadt (DE)
(72) Erfinder: REIM, Nikolaus, 85276 Pfaffenhofen (DE)
(74) Vertreter: Lehle, Josef
(86) Internationale Anmeldenummer: PCT/EP2015/000263
(87) Internationale Veröffentlichungsnummer: WO 2015/165558

(56) Entgegenhaltungen:
- EP-A2- 1 995 091
- US-A1- 2006 012 245
- US-A1- 2006 211 535
- US-B1- 6 663 536

## Beschreibung

Die Erfindung betrifft ein Verfahren zum Betreiben einer Fahrerassistenzeinrichtung für ein Kraftfahrzeug mit den Merkmalen des Oberbegriffs des Anspruchs 1. Die Erfindung betrifft weiterhin eine entsprechende Fahrerassistenzeinrichtung mit den Merkmalen des Oberbegriffs des Anspruchs 5.

Die Fahrerassistenzeinrichtung dient der Unterstützung eines Fahrers des Kraftfahrzeugs, insbesondere unter schwierigen Fahrbedingungen und/oder Umgebungsbedingungen. Beispielsweise ist die Fahrerassistenzeinrichtung eine Antriebsschlupfregeleinrichtung beziehungsweise liegt als eine solche vor. Entsprechend realisiert die Fahrerassistenzeinrichtung eine Antriebsschlupfregelung, bei welcher eine Bremseinrichtung dazu verwendet wird, ein zum Durchdrehen neigendes Rad beziehungsweise ein durchdrehendes Rad des Kraftfahrzeugs gezielt abzubremsen, indem das Rad mit einer bestimmten Bremskraft beaufschlagt wird. Ist dieses Rad über ein Differentialgetriebe mit einem weiteren Rad wirkverbunden, so führt dieses Bremsen dazu, dass das andere Rad mit einem größeren Antriebsdrehmoment beaufschlagt werden kann. Weil jedoch vor dem Bremseingriff das Rad zunächst durchdreht, also Schlupf vorliegen muss, können trotz der beschriebenen Vorgehensweise Nachteile bei der Traktion auftreten, beispielsweise weil sich das durchdrehende Rad eingräbt und/oder den Untergrund, welcher unter dem Rad vorliegt, poliert und somit den zwischen Rad und Untergrund vorliegenden Reibungskoeffizient weiter verringert.

Aus dem Stand der Technik sind die Druckschriften EP 1 995 091 A2, US 6,663,536 B1 und US 2006/0211535 A1 bekannt, welche sich jeweils mit Antischlupfregelungen befassen.

Es ist daher Aufgabe der Erfindung, ein Verfahren zum Betreiben einer Fahrerassistenzeinrichtung vorzuschlagen, welches den eingangs genannten Nachteil nicht aufweist, sondern insbesondere bei ungünstigen Umgebungsbedingungen die Traktion des Kraftfahrzeugs beziehungsweise der Räder des Kraftfahrzeugs auf dem Untergrund verbessert.

Dies wird erfindungsgemäß mit einem Verfahren mit den Merkmalen des Anspruchs 1 erreicht. Dabei sind die folgenden Schritte vorgesehen: Ermitteln jeweils eines Antriebspotential von allen angetriebenen Rädern wenigstens einer Achse des Kraftfahrzeugs, die über ein Differentialgetriebe miteinander wirkverbunden und gemeinsam antreibbar sind, Vergleichen der Antriebspotentiale, und Ansteuern einer Bremseinrichtung mit einer bestimmten Radbremskraft zum Abbremsen des Rads mit dem kleineren Antriebspotential. Dabei ist vorgesehen, dass das Antriebspotential aus einer Einfederung des jeweiligen Rads bestimmt wird, oder dass für die Räder die jeweils zugeordnete Radaufstandskraft ermittelt und aus dieser das Antriebspotential des jeweiligen Rads bestimmt wird. Unter dem Antriebspotential ist die Kraft beziehungsweise das Drehmoment zu verstehen, welche/welches erwartungsgemäß über das jeweilige Rad auf den Untergrund übertragen werden kann. Je größer das Antriebspotential, umso mehr Drehmoment kann auf den Untergrund übertragen werden, sodass eine höhere Traktion und/oder Beschleunigung des Kraftfahrzeugs ermöglicht wird. Das Antriebspotential wird für alle angetriebenen Räder der wenigstens einen Achse des Kraftfahrzeugs ermittelt. Für jedes Rad liegt also anschließend ein Wert für das Antriebspotential vor. Das Ermitteln kann grundsätzlich auf beliebige Art und Weise vorgenommen werden, wobei nachfolgend auf konkrete Ausführungsformen eingegangen wird.

Die angetriebenen Räder der Achse sind über ein Differentialgetriebe, welches insoweit als Achsdifferentialgetriebe bezeichnet werden kann, miteinander wirkverbunden und gemeinsam antreibbar. Das Differentialgetriebe kann als ungeregeltes beziehungsweise nicht schaltbares Differentialgetriebe ausgestaltet sein. Selbstverständlich kann das Verfahren auch auf Kraftfahrzeuge mit mehreren Achsen, beispielsweise mindestens oder genau zwei Achsen, angewandt werden. Vorzugsweise sind wenigstens zwei dieser Achsen, insbesondere alle Achsen des Kraftfahrzeugs, angetrieben, sodass insoweit an diesen wenigstens zwei Achsen angetriebene Räder vorliegen. Die Achsen des Kraftfahrzeugs sind beispielsweise mittels eines weiteren Differentialgetriebes, welches entsprechend als Zentral- oder Längsdifferentialgetriebe bezeichnet werden kann, miteinander wirkverbunden, vorzugsweise permanent. Das Längsdifferentialgetriebe kann als geregeltes oder schaltbares Längsdifferentialgetriebe, insbesondere als Längssperrdifferentialgetriebe, ausgeführt sein. Sind auf diese Art und Weise mehrere Achsen miteinander wirkverbunden, so weist bevorzugt jede dieser Achsen ein eigenes Achsdifferentialgetriebe auf.

In einem konkreten Ausführungsbeispiel bedeutet dies, dass ein Allrad-Kraftfahrzeug über zwei Achsen, nämlich eine Vorderachse sowie eine Hinterachse verfügt. Sowohl die Vorderachse als auch die Hinterachse verfügt über zwei Räder, welche jeweils über ein Achsdifferentialgetriebe miteinander gekoppelt beziehungsweise wirkverbunden sind. Das Achsdifferentialgetriebe der Vorderachse ist mit dem Achsdifferentialgetriebe der Hinterachse über ein Längsdifferentialgetriebe gekoppelt beziehungsweise wirkverbunden. Das bedeutet, dass das Achsdifferentialgetriebe der Vorderachse an eine erste Ausgangswelle und das Achsdifferentialgetriebe der Hinterachse an eine zweite Ausgangswelle des Längsdifferentialgetriebes angeschlossen ist. Eine Eingangswelle des Längsdifferentialgetriebes ist dagegen mit einer Antriebseinrichtung des Kraftfahrzeugs, mittels welcher ein wählbares Antriebsdrehmoment bereitstellbar ist, wirkverbunden.

Vorzugsweise ist das Längsdifferentialgetriebe als geregeltes oder schaltbares Längsdifferentialgetriebe, beispielsweise als Längssperrdifferentialgetriebe, ausgebildet. Auch das Achsdifferentialgetriebe der Hinterachse liegt bevorzugt als geregeltes oder schaltbares Achsdifferentialgetriebe, insbesondere als Achssperrdifferentialgetriebe, vor. Dies kann auch für das Achsdifferentialgetriebe der Vorderachse der Fall sein. Vorzugsweise ist dieses jedoch als ungeregeltes beziehungsweise nicht schaltbares Achsdifferentialgetriebe ausgeführt. Dies gilt insbesondere, falls das Längsdifferentialgetriebe unsymmetrisch wirkt, also - gleiches Antriebspotential aller angetriebenen Räder vorausgesetzt - das Antriebsdrehmoment ungleich auf die Achsdifferentialgetriebe von Vorderachse und Hinterachse verteilt, wobei beispielsweise der Hinterachse in zumindest einem Betriebszustand ein größerer Anteil des Antriebsdrehmoments zugeführt wird als der Vorderachse.

Nach dem Ermitteln des Antriebspotential für alle angetriebenen Räder der wenigstens einen Achse des Kraftfahrzeugs, vorzugsweise aller Achsen des Kraftfahrzeugs, wird das Rad mit dem kleineren Antriebspotential, insbesondere dem kleinsten Antriebspotential, ermittelt. Vorzugsweise wird dies - falls mehrere Achsen mit angetriebenen Rädern vorliegen - für jede Achse separat vorgenommen, sodass nachfolgend für jede Achse das Rad mit dem kleineren beziehungsweise kleinsten Antriebspotential bekannt ist. Dieses Rad wird nachfolgend mithilfe der Bremseinrichtung abgebremst, wozu diese entsprechend angesteuert wird. Selbstverständlich kann es auch vorgesehen sein, aus allen angetriebenen Rädern mehrerer Achsen, insbesondere aller Achsen des Kraftfahrzeugs, das Rad mit dem kleinsten Antriebspotential zu ermitteln und nachfolgend abzubremsen. Das Abbremsen des Rads erfolgt stets mit der bestimmten Radbremskraft. Diese kann konstant sein oder aber in Abhängigkeit von geeigneten Parametern ermittelt werden. Beispielsweise wird die Radbremskraft umso größer gewählt, je kleiner das Antriebspotential des abzubremsenden Rads ist und/oder je größer die Differenz zwischen dem Antriebspotential des abzubremsenden Rads und dem Antriebspotential wenigstens eines weiteren Rads ist.

Im Gegensatz zu einer üblichen Antriebsschlupfregelung ist es also nicht vorgesehen, für jedes Rad einzeln zu ermitteln, ob Schlupf vorliegt, und - falls dies der Fall ist beziehungsweise der Schlupf einen bestimmten Grenzwert überschreitet - das Rad abzubremsen. Vielmehr sollen mehrere Räder insgesamt betrachtet werden und aus diesen das abzubremsende Rad ausgewählt werden. Betrachtet werden insoweit die Räder einer oder mehrerer Achsen in ihrer Gesamtheit und nicht lediglich einzelne Räder, wie dies bei üblichen Antriebsschlupfregelungen der Fall ist. Es wird also nicht, wie bei normalerweise bei Antriebsschlupfregelungen üblich, abgewartet, bis tatsächlich an zumindest einem Rad Radschlupf auftritt, der größer ist als eine bestimmte Schlupfgrenze, und dann an diesem Rad eine Antriebsschlupfbremskraft bewirkt. Vielmehr soll auch dann das Abbremsen des Rads mit der bestimmten Radbremskraft erfolgen, wenn der Radschlupf kleiner als die bestimmte Schlupfgrenze ist, sodass bereits das Auftreten von Radschlupf beziehungsweise das Überschreiten der Schlupfgrenze durch den Radschlupf verhindert wird. Insoweit ist insbesondere ein Vorsteuern der Antriebsschlupfregelung mit der bestimmten Radbremskraft vorgesehen. Das bedeutet vorzugsweise, dass an dem Rad stets die größere Bremskraft aus Radbremskraft und Antriebsschlupfbremskraft angelegt wird.

Die Erfindung sieht vor, dass das Antriebspotential aus einer Einfederung des jeweiligen Rads bestimmt wird. Das Rad beziehungsweise alle Räder der Achse sind federnd aufgehängt, wobei sie sich entlang eines Federwegs mit einer bestimmten Federweglänge bewegen können und dabei federkraftbeaufschlagt sind. Die Federkraft kann grundsätzlich beliebig erzeugt werden, beispielsweise mittels einer Luftfederung, wozu beispielsweise eine Gasdruckfeder zum Einsatz kommt. Selbstverständlich kann jedoch auch eine herkömmliche Metallfeder beziehungsweise Stahlfeder zur Erzeugung der Federkraft verwendet werden.

Der Federweg, welcher zwischen einer vollständig eingefederten und einer vollständig ausgefederten Stellung des Rads vorliegt, kann auch als Gesamtfederweg bezeichnet werden. Die Differenz zwischen der momentanen Stellung des Rads in Bezug auf den Gesamtfederweg ausgehend von der vollständig ausgefederten Stellung wird Einfederung genannt. Es wird davon ausgegangen, dass eine größere Einfederung des Rads einer größeren Belastung und insbesondere einer größeren Radaufstandskraft, entspricht. Je größer also die Einfederung ist, umso größer ist auch das Antriebspotential des jeweiligen Rads.

Beispielsweise wird das Antriebspotential mithilfe einer mathematischen Beziehung aus der Einfederung ermittelt, wobei insbesondere das Antriebspotential proportional zu der Einfederung ist. Selbstverständlich können jedoch auch andere Beziehungen herangezogen werden. Gemäß den vorstehenden Ausführungen wird also beispielsweise das Rad abgebremst, welches die kleinere beziehungsweise die kleinste Einfederung aufweist. Zur Ermittlung der Einfederung wird beispielsweise ein Höhenstandsensor verwendet. Zu diesem Zweck ist bevorzugt jedem der Räder ein solcher zugeordnet. Auf diese Art und Weise wird beispielsweise ein Rad abgebremst, welches keinen Kontakt zum Untergrund des Kraftfahrzeugs aufweist und insoweit kein Drehmoment übertragen kann.

Die Erfindung sieht vor, dass für die Räder die jeweils zugeordnete Radaufstandskraft ermittelt und aus dieser das Antriebspotential des jeweiligen Rads bestimmt wird. Unter der Radaufstandskraft ist insbesondere die Kraft zu verstehen, welche zwischen dem Rad beziehungsweise einem Reifen des Rads und dem Untergrund des Kraftfahrzeugs wirkt. Die Radaufstandskraft entspricht also im Wesentlichen dem Anteil der Gewichtskraft des Kraftfahrzeugs, welche von dem entsprechenden Rad in den Untergrund abgeleitet wird. Diese Definition trifft insbesondere in einem Stillstand des Kraftfahrzeugs zu. Die Radaufstandskraft kann beispielsweise mittels eines dem entsprechenden Rad zugeordneten Radaufstandskraftsensors gemessen und/oder mittels eines Modells berechnet werden. Anschließend wird aus der Radaufstandskraft das entsprechende Antriebspotential bestimmt. Das Antriebspotential ist dabei beispielsweise umso größer, je größer die Radaufstandskraft ist.

Eine bevorzugte Ausgestaltung der Erfindung sieht vor, dass für die Räder der jeweils zugeordnete Reibwert zwischen dem entsprechenden Rad und einem Untergrund ermittelt und aus diesem das Antriebspotential des jeweiligen Rads bestimmt wird. Der Reibwert kann auch als Reibungskoeffizient oder Reibungszahl bezeichnet werden. Der Reibwert ist ein Maß für die Reibungskraft zwischen dem Rad beziehungsweise dem Reifen des Rads und dem Untergrund des Kraftfahrzeugs im Verhältnis zur Anpresskraft, beispielsweise also der Radaufstandskraft. Zur Ermittlung des Reibwerts werden beispielsweise ein Reibwertsensor und/oder ein Reibwertschätzer herangezogen. Selbstverständlich ist es auch möglich, das Antriebspotential aus mehreren der vorgenannten Größen, also der Einfederung, der Radaufstandskraft und dem Reibwert, zu ermitteln. Vorzugsweise werden dem Antriebspotential mehrere, also wenigstens zwei, der genannten Größen zugrunde gelegt. Besonders bevorzugt fließen sowohl die Einfederung, die Radaufstandskraft als auch der Reibwert in das Antriebspotential ein.

Die Erfindung sieht vor, dass die Radbremskraft aus der Differenz zwischen den Antriebspotentialen der Räder bestimmt wird. Diese Formulierung ist insbesondere zutreffend, falls die Achse des Kraftfahrzeugs über genau zwei angetriebene Räder verfügt. Werden mehr als zwei angetriebene Räder miteinander verglichen, so kann es vorgesehen sein, dass zunächst ein Mittelwert der Antriebspotentiale aller Räder berechnet wird und anschließend für jedes Rad die Differenz des Antriebspotentials zu dem Mittelwert berechnet wird.

Es kann nun vorgesehen sein, dass die Bremseinrichtung zum Abbremsen des Rads mit dem kleinsten Antriebspotential angesteuert wird, wobei der dabei verwendeten bestimmten Radbremskraft die Differenz zwischen dem Antriebspotential des Rads und dem Mittelwert zugrunde gelegt wird. Alternativ kann die Radbremskraft auch aus der Differenz zwischen dem größten Antriebspotential aller Räder und dem kleinsten Antriebspotential aller Räder ermittelt werden.

Selbstverständlich kann es auch vorgesehen sein, mehrere der Räder mithilfe der Bremseinrichtung abzubremsen. Die dabei jeweils verwendete Radbremskraft wird beispielsweise aus der Differenz zwischen dem jeweiligen Antriebspotential des entsprechenden Rads und dem Mittelwert berechnet.

Eine Weiterbildung der Erfindung sieht vor, dass die Bremseinrichtung nur zum Abbremsen des Rads mit dem kleineren Bremspotential angesteuert wird, wenn zumindest eine Fahrzeugzustandsgrößenabfrage ein positives Ergebnis zurückgibt. Es wird also beispielsweise ein Vergleich zwischen einer Fahrzeugzustandsgröße sowie einem Grenzwert vorgenommen. Nur wenn der Vergleich positiv, die Bedingung also erfüllt ist, soll das Rad mit dem kleineren Bremspotential mithilfe der Bremseinrichtung abgebremst werden.

In einer weiteren Ausgestaltung kann es vorgesehen sein, dass die Fahrzeugzustandsgrößenabfrage überprüft, ob eine Fahrgeschwindigkeit kleiner als ein Geschwindigkeitsgrenzwert ist, und/oder ob eine Fahrzeugneigung größer ist als ein Neigungsgrenzwert und/oder ob ein Lenkwinkel innerhalb eines bestimmten Lenkwinkelbereichs liegt, und/oder ob ein Offroadmodus vorliegt. Als Fahrzeugzustandsgröße wird also insbesondere die Fahrgeschwindigkeit, die Fahrzeugneigung oder der Lenkwinkel herangezogen. Der Grenzwert wird entsprechend von dem Geschwindigkeitsgrenzwert, dem Neigungsgrenzwert oder wenigstens einem Lenkwinkelgrenzwert, der den Lenkwinkelbereich in wenigstens eine Richtung begrenzt, dargestellt. Selbstverständlich kann es vorgesehen sein, dass mehrere, wenigstens also zwei, der genannten Fahrzeugzustandsgrößenabfragen durchgeführt werden, und das Rad nur dann mithilfe der Bremseinrichtung abgebremst wird, wenn alle der verwendeten Fahrzeugzustandsgrößenabfragen das positive Ergebnis zurückgeben.

So soll beispielsweise das Rad nicht abgebremst werden, wenn das Kraftfahrzeug bereits eine ausreichende Geschwindigkeit vorlegt, welche dem Geschwindigkeitsgrenzwert entspricht. Zusätzlich oder alternativ soll das Abbremsen nur dann durchgeführt werden, wenn eine bestimmte Neigung des Kraftfahrzeugs überschritten ist, das Kraftfahrzeug also beispielsweise an einem Hang steht. Auch der Lenkwinkel kann Einfluss auf das Durchführen des Abbremsens des Rads haben. So soll dieses beispielsweise nur dann durchgeführt werden, wenn der Lenkwinkel innerhalb des Lenkwinkelbereichs liegt, der vorzugweise einen Winkel einschließt, welcher bei Geradeausfahrt des Kraftfahrzeugs vorliegt.

Zu guter Letzt kann es vorgesehen sein, dass überprüft wird, ob der Offroadmodus vorliegt. Dieser kann beispielsweise von einem Fahrer des Kraftfahrzeugs manuell aktiviert und deaktiviert werden. Das Ansteuern der Bremseinrichtung zum Abbremsen des Rads ist üblicherweise nur dann notwendig, wenn sich das Kraftfahrzeug in schwerem Gelände befindet, wobei vorzugsweise der Offroadmodus aktiviert ist. Das Abbremsen soll bei einer derartigen Ausführungsform also nur bei aktiviertem Offroadmodus vorgenommen werden.

Eine weitere bevorzugte Ausgestaltung der Erfindung sieht vor, dass eine Antriebsschlupfregelung die Bremseinrichtung mit einer Antriebsschlupfbremskraft zum Abbremsen wenigstens eines der Räder ansteuert, wenn ein Radschlupf des Rads eines bestimmte Schlupfgrenze überschreitet, wobei die bestimmte Radbremskraft zum Vorsteuern der Antriebsschlupfregelung verwendet wird. Neben der vorgenannten Vorgehensweise zum Ansteuern der Bremseinrichtung anhand des Antriebspotentials soll die Antriebsschlupfregelung vorgesehen sein. Diese wird aktiv, wenn ein Durchdrehen des Rads festgestellt wird. In diesem Fall wird die Antriebsschlupfbremskraft geeignet festgelegt, um das Durchdrehen des Rads zu verhindern, den Radschlupf also zu verkleinern. Die Antriebsschlupfbremskraft kann konstant gewählt sein und/oder in Abhängigkeit von dem Radschlupf des entsprechenden Rads festgelegt werden.

Vorzugsweise steuert die Antriebsschlupfregelung die Bremseinrichtung nur dann zum Bremsen des Rads an, wenn der Radschlupf dieses Rades die Schlupfgrenze überschreitet. Dabei ist es vorgesehen, dass die bestimmte Radbremskraft zum Vorsteuern der Antriebsschlupfregelung verwendet wird. Das bedeutet insbesondere, dass die Bremseinrichtung zum Abbremsen des Rads mit einer Gesamtbremskraft angesteuert wird, welche der größeren Bremskraft aus der Antriebsschlupfbremskraft und der Radbremskraft entspricht. Ist also die Antriebsschlupfbremskraft größer als die Radbremskraft, so entspricht die Gesamtbremskraft der Antriebsschlupfbremskraft. Umgekehrt entspricht die Gesamtbremskraft der Radbremskraft, falls die Radbremskraft größer ist als die Antriebsschlupfbremskraft.

Schließlich kann vorgesehen sein, dass als Bremseinrichtung eine Betriebsbremse verwendet wird. Mithilfe der Betriebsbremse wird ein mechanisches Bremsen des entsprechenden Rads erzielt. Es ist also nicht vorgesehen, das Rad beispielsweise durch Einsatz einer Motorbremse oder dergleichen abzubremsen.

Die Erfindung betrifft weiterhin eine Fahrerassistenzeinrichtung für ein Kraftfahrzeug, insbesondere zur Durchführung des vorstehend beschriebenen Verfahrens. Die Fahrerassistenzeinrichtung zeichnet sich dadurch aus, dass sie zur Durchführung der folgenden Schritte ausgebildet ist: Ermitteln jeweils eines Antriebspotentials von allen angetriebenen Rädern wenigstens einer Achse des Kraftfahrzeugs, die über ein Differentialgetriebe miteinander wirkverbunden und gemeinsam antreibbar sind, Vergleichen der Antriebspotentiale, und Ansteuern einer Bremseinrichtung mit einer bestimmten Radbremskraft zum Abbremsen des Rads mit dem kleineren Antriebspotential. Dabei ist vorgesehen, dass das Antriebspotential aus einer Einfederung des jeweiligen Rads bestimmt wird, oder dass für die Räder die jeweils zugeordnete Radaufstandskraft ermittelt und aus dieser das Antriebspotential des jeweiligen Rads bestimmt wird. Auf die Vorteile einer derartigen Fahrerassistenzeinrichtung beziehungsweise einer derartigen Vorgehensweise wurde bereits hingewiesen. Die Fahrerassistenzeinrichtung sowie das entsprechende Verfahren können gemäß den vorstehenden Ausführungen weitergebildet sein, sodass insoweit auf diese verwiesen wird.

Die Erfindung betrifft selbstverständlich auch ein Kraftfahrzeug, welches zur Durchführung des vorstehend beschriebenen Verfahrens ausgebildet ist und/oder welches über die erwähnte Fahrerassistenzeinrichtung verfügt.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung eines Kraftfahrzeugs mit einer Antriebsschlupfregelung, und
- Figur 2: das bereits bekannte Kraftfahrzeug mit der Antriebsschlupfregelung sowie einer Traktionsoptimierung.

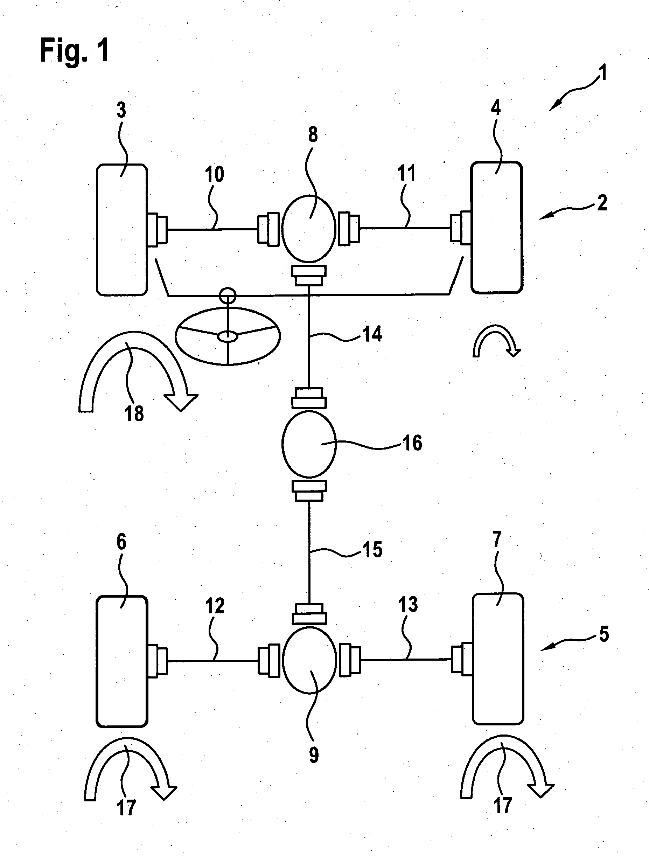

Die Figur 1 zeigt eine schematische Darstellung eines Kraftfahrzeugs 1. Dieses verfügt über eine erste Achse 2, beispielsweise eine Vorderachse, mit Rädern 3 und 4. Weiterhin weist das Kraftfahrzeug 1 eine zweite Achse 5, beispielsweise eine Hinterachse, mit Rädern 6 und 7 auf. Die Räder 3 und 4 der ersten Achse 2 sind über ein Achsdifferentialgetriebe 8 miteinander wirkverbunden. Analog dazu sind die Räder 6 und 7 der zweiten Achse 5 über ein Achsdifferentialgetriebe 9 miteinander wirkverbunden. Beispielsweise verfügt das Achsdifferentialgetriebe 8 über Ausgangswellen 10 und 11, das Achsdifferentialgetriebe 9 über Ausgangswellen 12 und 13. An die Ausgangswelle 10 ist das Rad 3, an die Ausgangswelle 1 das Rad 4, an die Ausgangswelle 12 das Rad 6 und an die Ausgangswelle 13 das Rad 7 angebunden, vorzugsweise starr und/oder permanent.

Neben den Ausgangswellen 10, 11, 12 und 13 verfügen die Achsdifferentialgetriebe 8 und 9 über Eingangswellen 14 und 15. Diese dienen als Ausgangswellen eines Mittendifferentialgetriebes 16 beziehungsweise sind an diese angeschlossen. Über das Mittendifferentialgetriebe 16 ist den Achsdifferentialgetrieben 8 und 9 ein Antriebsdrehmoment einer Antriebseinrichtung zuführbar. Beispielsweise liegt das Achsdifferentialgetriebe 9 als geregeltes Achsdifferentialgetriebe vor. Analog dazu kann das Mittendifferentialgetriebe 16 als regelbares Mittendifferentialgetriebe ausgeführt sein. Das Achsdifferentialgetriebe 8 ist dagegen bevorzugt ein ungeregeltes beziehungsweise nicht schaltbares Achsdifferentialgetriebe.

Das Kraftfahrzeug 1 ist hier beispielhaft derart auf einem Untergrund angeordnet, dass die Räder 3 und 7 lediglich mit einer geringen Radaufstandskraft belastet sind, sodass sie ausgefedert sind. Die Räder 4 und 6 dagegen sind dagegen mit einer höheren Radaufstandskraft belastet, sodass sie weiter eingefedert sind als die Räder 3 und 7. Das Kraftfahrzeug 1 verfügt über eine Antriebsschlupfregelung, welche eine hier nicht dargestellte Bremseinrichtung zum Abbremsen wenigstens eines der Räder 3, 4, 6 und 7 ansteuert, wenn ein Schlupf des Rads 3, 4, 6 beziehungsweise 7 eine bestimmte Schlupfgrenze überschreitet. Weil die Räder 4 und 6 höher belastet sind als die Räder 3 und 7, ist es wünschenswert, dass ersteren ein größerer Teil des Antriebsdrehmoments zuzuführen ist, um die Traktion des Kraftfahrzeugs 1 zu verbessern.

Es wird jedoch deutlich, dass hierzu zunächst an der zweiten Achse 5 beziehungsweise den Rädern 6 und 7 ein bestimmter Schlupf (angedeutet durch die Pfeile 17) auftreten muss, damit der ersten Achse 2 ein größerer Anteil des Antriebsdrehmoments zugeführt wird. Weiterhin muss an dem geringer belasteten Rad 3 ein sehr großer Schlupf (angedeutet durch den Pfeil 18) vorliegen, damit dem höher belasteten Rad 4 ein ausreichender Anteil des Antriebsdrehmoments zugeführt wird. In der anhand der Figur 1 illustrierten Situation des Kraftfahrzeugs 1 kann allein mithilfe der Antriebsschlupfregelung zwar eine Vorwärtsbewegung des Kraftfahrzeugs 1 bewirkt werden, jedoch lediglich bei sehr großem Schlupf an den Rädern 3, 6 und 7.

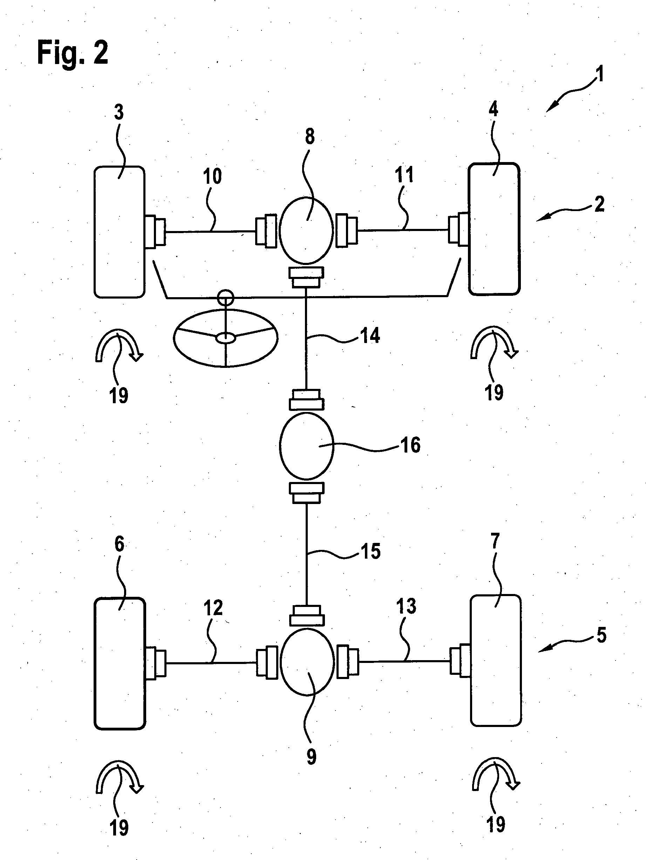

Die Figur 2 zeigt das bereits bekannte Kraftfahrzeug 1, sodass insoweit auf die vorstehenden Ausführungen verwiesen wird. Hier ist es nun vorgesehen, dass mittels einer nicht im Detail dargestellten Fahrerassistenzeinrichtung zunächst jeweils ein Antriebspotential von allen angetriebenen Rädern 3 und 4 der ersten Achse 2 ermittelt wird. Diese ermittelten Antriebspotentiale werden miteinander verglichen und anschließend die Bremseinrichtung mit einer bestimmten Radbremskraft zum Abbremsen des Rads 3 beziehungsweise 4 mit dem kleineren Antriebspotential angesteuert.

Das bedeutet, dass das geringer belastete Rad 3 bereits abgebremst wird, bevor tatsächlich Schlupf auftritt. So kann an allen vier Rädern 3, 4, 6 und 7 ein vergleichsweise geringer Schlupf (angedeutet durch den Pfeil 19) erzielt werden, wobei das auf den Untergrund des Kraftfahrzeugs 1 wirkende Antriebsdrehmoment zu dem im vorstehend anhand der Figur 1 erläuterten Fall identisch ist. Es werden also die mit einem großen Schlupf der Räder 3, 4, 6 und 7 einhergehenden Nachteile vermieden, beispielsweise ein Eingraben der Räder 3, 4, 6 und 7, ein Polieren des Untergrunds und Stabilitätsnachteile, welche beispielsweise durch eine Instabilität der zweiten Achse 5 (aufgrund des großen Schlupfes) auftreten kann.

### BEZUGSZEICHENLISTE

- 1: Kraftfahrzeug
- 2: 1. Achse
- 3: Rad
- 4: Rad
- 5: 2. Achse
- 6: Rad
- 7: Rad
- 8: Achsdifferentialgetriebe
- 9: Achsdifferentialgetriebe
- 10: Ausgangswelle
- 11: Ausgangswelle
- 12: Ausgangswelle
- 13: Ausgangswelle
- 14: Eingangswelle
- 15: Eingangswelle
- 16: Mittendifferentialgetriebe
- 17: Pfeil
- 18: Pfeil
- 19: Pfeil

## Patentansprüche

1. Verfahren zum Betreiben einer Fahrerassistenzeinrichtung für ein Kraftfahrzeug (1), mit den Schritten:
- Ermitteln jeweils eines Antriebspotentials von allen angetriebenen Rädern (3,4) wenigstens einer Achse (3) des Kraftfahrzeugs (1), die über ein Differentialgetriebe miteinander wirkverbunden und gemeinsam antreibbar sind,
- Vergleichen der Antriebspotentiale, und
- Ansteuern einer Bremseinrichtung mit einer bestimmten Radbremskraft zum Abbremsen des Rads (3) mit dem kleineren Antriebspotential,
**dadurch gekennzeichnet, dass** das Antriebspotential aus einer Einfederung des jeweiligen Rads (3,4) bestimmt wird oder für die Räder (3,4) die jeweils zugeordnete Radaufstandskraft ermittelt und aus dieser das Antriebspotential des jeweiligen Rads (3,4) bestimmt wird, und dass eine Antriebsschlupfregelung die Bremseinrichtung mit einer Antriebsschlupfbremskraft zum Abbremsen wenigstens eines der Räder (3,4,6,7) ansteuert, wenn ein Radschlupf des Rads (3,4,6,7) eine bestimmte Schlupfgrenze überschreitet, wobei die Radbremskraft aus der Differenz zwischen den Antriebspotentialen der Räder (3,4) bestimmt und zum Vorsteuern der Antriebsschlupfregelung verwendet wird.

2. Verfahren nach Anspruch 1, **dadurch gekennzeichnet, dass** die Bremseinrichtung nur zum Abbremsen des Rads (3,4) mit dem kleineren Bremspotential angesteuert wird, wenn zumindest eine Fahrzeugzustandsgrößenabfrage ein positives Ergebnis zurückgibt.

3. Verfahren nach einem der vorhergehenden Ansprüche, **dadurch gekennzeichnet, dass** die Fahrzeugzustandsgrößenabfrage überprüft,
- ob eine Fahrgeschwindigkeit kleiner als ein Geschwindigkeitsgrenzwert ist, und/oder
- ob eine Fahrzeugneigung größer ist als ein Neigungsgrenzwert, und/oder
- ob ein Lenkwinkel innerhalb eines bestimmten Lenkwinkelbereichs liegt, und/oder
- ob ein Offroadmodus vorliegt.

4. Verfahren nach einem der vorhergehenden Ansprüche, **dadurch gekennzeichnet, dass** als Bremseinrichtung eine Betriebsbremse verwendet wird.

5. Fahrerassistenzeinrichtung für ein Kraftfahrzeug (1), zur Durchführung des Verfahrens nach einem oder mehreren der vorhergehenden Ansprüche, wobei die Fahrerassistenzeinrichtung zur Durchführung der folgenden Schritte ausgebildet ist:
- Ermitteln jeweils eines Antriebspotential von allen angetriebenen Rädern (3,4) wenigstens einer Achse (2) des Kraftfahrzeugs (1), die über ein Differentialgetriebe miteinander wirkverbunden und gemeinsam antreibbar sind,
- Vergleichen der Antriebspotentiale, und
- Ansteuern einer Bremseinrichtung mit einer bestimmten Radbremskraft zum Abbremsen des Rads (3,4) mit dem kleineren Antriebspotential,
**dadurch gekennzeichnet, dass** das Antriebspotential aus einer Einfederung des jeweiligen Rads (3,4) bestimmt wird oder für die Räder (3,4) die jeweils zugeordnete Radaufstandskraft ermittelt und aus dieser das Antriebspotential des jeweiligen Rads (3,4) bestimmt wird, und dass eine Antriebsschlupfregelung die Bremseinrichtung mit einer Antriebsschlupfbremskraft zum Abbremsen wenigstens eines der Räder (3,4,6,7) ansteuert, wenn ein Radschlupf des Rads (3,4,6,7) eine bestimmte Schlupfgrenze überschreitet, wobei die Radbremskraft aus der Differenz zwischen den Antriebspotentialen der Räder (3,4) bestimmt und zum Vorsteuern der Antriebsschlupfregelung verwendet wird.

## Claims

1. Method for operating a driver assistance device for a motor vehicle (1), comprising the steps:
- a drive potential is respectively determined from all driven wheels (3,4) of at least one axle (3) of the motor vehicle (1), said wheels being operatively connected to one another via a differential gear and drivable together,
- the drive potentials are compared and
- a braking device with a specific wheel braking force for braking the wheel (3) is controlled using a lower drive potential,
**characterised in that** the drive potential is determined from a spring compression of the respective wheel (3,4) or the wheel contact force associated with each of the wheels (3,4) is established and from this the drive potential of the respective wheel (3,4) is determined, and that a traction control system controls the braking device with a traction control braking force to brake at least one of the wheels (3,4,6,7), if a wheel slip of the wheel (3,4,6,7) exceeds a certain slip limit, wherein the wheel braking force is determined from the difference between the drive potentials of the wheels (3,4) and is used to pre-control the traction control system.

2. Method according to claim 1, **characterised in that** the braking device is controlled only to brake the wheel (3,4) with the smaller braking potential, if at least one vehicle state variable query returns a positive result.

3. Method according to any one of the preceding claims, **characterised in that** the vehicle state variable query checks
- whether a vehicle speed is lower than a speed limit value and/or
- whether a vehicle inclination is greater than an inclination limit value and/or
- whether a steering angle is within a defined steering angle range and/or
- whether an off-road mode is present.

4. Method according to any one of the preceding claims, **characterised in that** a service brake is used as braking device.

5. Driver assistance device for a motor vehicle (1), for carrying out the method according to one or more of the preceding claims, wherein the driver assistance device is configured to carry out the following steps:
- a drive potential is respectively determined from all driven wheels (3,4) of at least one axle (2) of the motor vehicle (1), said wheels being operatively connected to one another via a differential gear and drivable together,
- the drive potentials are compared and
- a braking device with a specific wheel braking force for braking the wheel (3, 4) is controlled using a lower drive potential,
**characterised in that** the drive potential is determined from a spring compression of the respective wheel (3,4) or the wheel contact force associated with each of the wheels (3,4) is established and from this the drive potential of the respective wheel (3,4) is determined, and that a traction control system controls the braking device with a traction control braking force to brake at least one of the wheels (3,4,6,7), if a wheel slip of the wheel (3,4,6,7) exceeds a certain slip limit, wherein the wheel braking force is determined from the difference between the drive potentials of the wheels (3,4) and is used to pre-control the traction control system.

## Revendications

1. Procédé de fonctionnement d'un dispositif d'aide à la conduite pour un véhicule automobile (1), **caractérisé par** les étapes consistant à :
- déterminer le potentiel moteur de chacune des roues entraînées (3, 4) d'au moins un essieu (3) du véhicule automobile (1), qui sont reliées entre elles par une transmission différentielle et peuvent être entraînées ensemble,
- comparer les potentiels moteurs, et
- commander un dispositif de freinage ayant une force de freinage définie pour freiner la roue (3) avec le potentiel moteur le plus petit,
**caractérisé en ce que** le potentiel moteur est déterminé à partir d'une déflexion de la roue respective (3, 4) ou que la force de contact de la roue respectivement associée est déterminée pour les roues (3, 4) et que le potentiel moteur de la roue respective (3, 4) est déterminé à partir de cela, et **en ce qu'**une régulation d'antipatinage à la traction active le dispositif de freinage avec une force de freinage d'antipatinage à la traction pour freiner au moins une des roues (3, 4, 6, 7) lorsqu'un patinage de la roue (3, 4, 6, 7) dépasse une limite de patinage spécifique, la force de freinage de la roue étant déterminée à partir de la différence entre les potentiels moteurs des roues (3, 4) et étant utilisée pour piloter la régulation d'antipatinage à la traction.

2. Procédé selon la revendication 1, **caractérisé en ce que** le dispositif de freinage est activé pour freiner la roue (3, 4) ayant le potentiel de freinage le plus faible uniquement si au moins une requête de variable d'état de véhicule renvoie un résultat positif.

3. Procédé selon l'une quelconque des revendications précédentes, **caractérisé en ce que** la requête de variable d'état de véhicule vérifie
- si une vitesse de conduite est inférieure à une limite de vitesse, et/ou
- si l'inclinaison du véhicule est supérieure à une limite d'inclinaison, et/ou
- si un angle de braquage se situe dans une certaine plage d'angle de braquage, et/ou
- s'il existe un mode tout-terrain.

4. Procédé selon l'une quelconque des revendications précédentes, **caractérisé en ce qu'**un frein de service est utilisé comme dispositif de freinage.

5. Dispositif d'aide à la conduite pour un véhicule automobile (1), pour la mise en œuvre du procédé selon une ou plusieurs des revendications précédentes, le dispositif d'aide à la conduite étant conçu pour la mise en œuvre des étapes suivantes consistant à :
- déterminer le potentiel moteur de chacune des roues entraînées (3, 4) d'au moins un essieu (2) du véhicule automobile (1), qui sont reliées entre elles par une transmission différentielle et peuvent être entraînées ensemble,
- comparer les potentiels moteurs, et
- commander un dispositif de freinage ayant une force de freinage définie pour freiner la roue (3,4) avec le potentiel moteur le plus petit,
**caractérisé en ce que** le potentiel moteur est déterminé à partir d'une déflexion de la roue respective (3, 4) ou que la force de contact de la roue respectivement associée est déterminée pour les roues (3, 4) et que le potentiel moteur de la roue respective (3, 4) est déterminé à partir de cela, et **en ce qu'**une régulation d'antipatinage à la traction active le dispositif de freinage avec une force de freinage d'antipatinage à la traction pour freiner au moins une des roues (3, 4, 6, 7) lorsqu'un patinage de la roue (3, 4, 6, 7) dépasse une limite de patinage spécifique, la force de freinage de la roue étant déterminée à partir de la différence entre les potentiels moteurs des roues (3, 4) et étant utilisée pour piloter la régulation d'antipatinage à la traction.
